# EUROPEAN PATENT SPECIFICATION

(11) **EP 2 403 748 B1**
(45) Date of publication and mention of the grant of the patent: **30.10.2013**
(21) Application number: 09779112.3
(22) Date of filing: 05.03.2009
(51) Int. Cl.: B62D 29/00, B29C 44/12

(54) **METHOD FOR SEALING AND ACOUSTIC DAMPING OF LONGITUDINAL CAVITIES, AND INSERT USED THEREFORE**
VERFAHREN ZUR ABDICHTUNG UND AKUSTISCHEN DÄMPFUNG VON LÄNGSHOHLRÄUMEN UND DAFÜR VERWENDETER EINSATZ
PROCÉDÉ PERMETTANT D'ASSURER L'ÉTANCHÉITÉ ET L'AMORTISSEMENT ACOUSTIQUE DE CAVITÉS LONGITUDINALES, ET INSERT UTILISÉ À CET EFFET

(43) Date of publication of application: 11.01.2012
(73) Proprietor: Henkel AG & Co. KGaA, 40589 Düsseldorf (DE)
(72) Inventor: WOJTOWICKI, Jean-Luc, F-58150 Pouilly sur Loire (FR); CHAUT, Christophe, 67200 Strasbourg (FR)
(86) International application number: PCT/EP2009/052602
(87) International publication number: WO 2010/099825

(56) References cited:
- EP-A- 1 122 156
- EP-A- 1 790 554
- WO-A-00/43254
- JP-A- 1 012 976

## Description

The present invention relates to a method for sealing and acoustic damping of longitudinal cavities, and to inserts used therefore. For example, longitudinal cavities in structural components of vehicles can be sealed and/or damped by this method.

Modern vehicle concepts and structural designs of vehicles have a plurality of cavities which have to be sealed in order to prevent the ingress of moisture and contaminants, since the latter can result in corrosion from the inside on the corresponding body parts. This applies, in particular, to modern self-supporting body constructions in which a heavy frame construction is replaced by so-called "space frames". With the latter, use is made of a lightweight, structurally solid chassis made of prefabricated hollow sections. Such constructions have, depending upon the specific system, a number of cavities which have to be sealed against the penetration of moisture and contaminants. These cavities include the upwardly extending A-, B- and C-pillars supporting the roof structure, the roof rail, portions of the fenders, or the sill.

In addition, these cavities transmit airborne sound in the form of unpleasant vehicle running noises and wind noises, therefore such sealing measures also serve to reduce the noises and therefore to enhance the comfort of travelling in the vehicle.

During the assembly of the car, these frame parts and body parts containing cavities are prefabricated from half-shell components which were joined at a later time by welding and/or adhesive bonding so as to form the closed hollow section. With such a type of construction the cavity in the early body in white ("body shop") state of a vehicle body is accordingly easily accessible, so that sealing and acoustically damping baffle parts (sometimes referred to as "pillar fillers" or "cavity filler inserts") can be fixed in this early phase of body construction by mechanical hanging, by insertion into appropriate holding devices, bores or by welding to the cavity walls.

Most modern baffles are designed to include a sealing material disposed on a support member or carrier. The carrier is generally manufactured from a rigid material, such as hard plastic, such that its shape approximates the shape of the cavity to be sealed. The carrier/sealing material combination is configured such that the carrier is inserted into a cavity, and the sealing material creates an airtight seal between the carrier and the walls of the cavity. Typically, the sealing material is activated (thermally or chemically) after insertion into the cavity so that the sealing material forms a seal with the walls of the cavity.

WO 00/03894 A1 discloses a lightweight expandable baffle for sealing a cavity of a vehicle body at a predetermined cross section of the cavity. This baffle includes a rigid support plate having an outer periphery with a shape generally corresponding to but smaller than the shape of the cross section of the cavity. Said baffle comprises a heat expandable sealing material mounted to the outer periphery of the rigid support plate having an activation temperature range at which the material expands. The support plate is being formed of a material having a higher melting point than the activation temperature range of the sealing material. When activated, the sealing material expands radially from the rigid support plate to fill the cross-sectional cavity between the rigid support plate and the cavity walls.

In baffles according to the state of the art, the carrier for the thermally expandable sealing material is usually plate-like and flat. The baffle is inserted into the longitudinal cavity in a way that the plane of the carrier lies perpendicular to the longitudinal axis of the cavity, so that the cavity is bisected by the baffle.

W02007/039308 discloses a dissipative vibratory wave barrier which comprises a carrier having an inner surface and an outer surface, the carrier having a polygonal section, especially rectangular, optionally U-shaped and comprising on at least one of its outer surface or its inner surface a coating comprising a thermally expandable material selected among those which, after expansion and at a temperature between - 10 and +40°C, have a Young's storage modulus E' between 0.1 MPa and 1000 MPa, preferably a loss modulus E" between 0.5 and 1, a loss factor greater than 0.3 (preferably, greater than 1) and preferably also a shear storage modulus G' between 0.1 MPa and 500 MPa in the frequency range 0 to 500 Hz.

Such a dissipative vibratory wave barrier usually has a three-dimensional shape. W02007/039308 Describes this with the following words:

"The carrier selected for use in the present invention has an inner surface and an outer surface. In cross-section, the carrier should be polygonal in shape. Preferably, the cross-sectional shape of the carrier has at least three sides that are straight lines and/or arcs. In one embodiment, the carrier is open or partially open on one side, but in another embodiment the cross-sectional shape of the carrier is closed. For example, the carrier in cross-section may have a shape selected from the group consisting of rectangular, square, pentagonal, hexagonal, U-shaped, and D-shaped. The sides of the carrier may be equal or different in length, with the length generally being selected in accordance with the interior dimensions of the structural element into which the dissipative vibratory wave barrier is to be inserted or the exterior dimensions of the structural element around which the dissipative vibratory wave barrier is to be placed. The carrier may be completely hollow, but in certain embodiments could have one or more interior elements such as braces, ribs, cross-walls and the like."

WO 2005/051748 discloses a method of reinforcing or baffling a structure of an automotive vehicle, comprising: forming a metal foam carrier member; disposing an expandable reinforcement or baffling material upon an exterior portion of the carrier member for forming a reinforcement or baffling member; positioning the reinforcement or baffling member within a cavity of the structure of the automotive vehicle; and expanding and adhering the expandable material to walls of the structure wherein the walls at least partially define the cavity.

According to figure 11 of this document, the metal foam carrier may be longitudinal and flat so that it can be inserted into a longitudinal cavity with its own longitudinal axis parallel to the longitudinal cavity axis. Onto at least one of the two flat surfaces of this carrier member a foamable material can be disposed which foams on heating. Thus, together with the carrier member, it seals off the cavity completely along a section which, according to the quoted figure, appears to be longer than the diameter of the cavity. The flat carrier member divides the cavity into two sections on either site of the flat carrier member. This document does not disclose a carrier member consisting of at least two carrier plates intersecting each other along a line parallel to the longitudinal cavity axis, so that the cavity is divided into at least three subsections parallel to the longitudinal cavity axis.

WO 01/42076 discloses a tube reinforcement having displaceable modular components. The assembly includes a plurality of displaceable hollow pillars which have a hollow inside channel parallel to the long pillar axis. The outside of the pillars is covered by a structural foam coating. The modular pillars are grouped together with at least one resilient retaining mechanism for resilient deformation during insertion into a tube structure. This arrangement is intended for structural reinforcement, but not for acoustic baffling. Due to the hollow inner channels of the pillars, there is little damping of airborne sound propagating through the hollow channels of the pillars.

US 5,766,719 discloses a sealable element comprising: a first piece, consisting of two plates separated from each other and linked by a means provided with several openings to define a room or groove between said two plates; a second piece consisting of two plates separated from each other and linked by a means provided with several openings to define a room or grove between said two plates; and a composite material partly located in the room or groove of the first piece and partly located in the room of the second piece, with the composite material comprising a support including a first plate and a second plate disposed parallel to and spaced from one another, and means for connecting the plates together to form a room or groove between the two plates of the support, and heat foamable material arranged in said room or grove of the support, and with said support being made of a heat resistant material with a melting temperature higher than temperature required for the foaming of the foamable material, so that said foamable material, when heat is applied thereto, expands to a foamed form extending out of the room or groove of the support so at least one opening of the support or formed in the support due to foaming pressure and into the rooms or groove of the first and second pieces reaching the means linking the plates of said pieces so as to push the pieces away from each other.

Fig. 19 of this document shows that such parts can be fabricated in a mixed technique which consists in extruding a carrier profile as a continuous profile, consisting essentially of two plates intersecting each other along a line parallel to the extrusion axis. The extruded carrier profile is then brought together with the heat expandable material inside the injection mould during the injection moulding process. According to Fig. 20, the room between the intersecting carrier plates is completely filled up with the foamable material. Therefore, when this structure is inserted into a cavity, as indicated by Fig. 23 of this document, the cavity is nearly completely filled by the carrier and the foamable material, so that the expansion rate of the foamable material must be low to fill the cavity completely. Furthermore, Fig. 24 and Fig. 27 of this document show that the extruded carrier structure covering the foamable material is not intended to be inserted into a longitudinal cavity at a length which is longer than the cross-section of the cavity. Instead, it is suggested to cut the extruded strands into plates with a thickness which is much lower than the cross-section of the cavity. This structure is not used for acoustic baffling, but for fixing the walls of the cavity together. Therefore, this document describes a fixing element, but not an element for effective acoustic damping.

The actual trend among the providers of vehicle cavity sealers is to use high expanding foams. These are foams with an expansion rate on heating of at least 1000, preferably at least 2000 %. These high expanding foams may lead to simplified part designs, e.g. to designs without the need of a carrier. This in turn reduces tooling costs. Due to the high expansion, less material is needed to fill a cavity. Thus, the costs for sealing and acoustic damping would be reduced compared to standard pillar filler designs.

Nevertheless, if such highly expanding materials are suitable for cavities with small cross sections (like, e.g., an "A-pillar" of a passenger car), they may cause problems in the case of larger cross sections (like, e.g., the "C-pillars" or rockers of passenger cars). This is due to: a) flow of the product during curing ("sagging"), b) poor repeatability of the blowing process, c) no filling of small or narrow gaps due to high bubble size or pore size.

In addition, one expected pitfall is the acoustic performance of such materials. The disadvantage of highly expanding foams is their low specific weight in conjunction to a low E-modulus that could lead to poor acoustic performances.

Young's storage modulus (E') is defined as the ratio of tensile stress to tensile strain below the proportional limit of a material. Shear storage modulus G' is defined as the ratio of shearing stress to shearing strain within the proportional limit and is considered a measure of the equivalent energy stored elastically in a material. The loss factor (also sometimes referred to as the structural intrinsic damping or tan delta) is the ratio of the Young's loss modulus E" over Young's storage modulus E' for the damping in tension compression. For the damping in shear, the loss factor is the ratio of the shear loss modulus G" over the shear storage modulus G'. These values may be readily determined by Dynamic Mechanical Analysis (DMA) of a material, which in the context of this invention is the thermally expandable material after expansion. As is well known in the art, Dynamic Mechanical Analysis can be performed either by an indirect method where the material is characterized on a carrier (Oberst's beam test) or by a direct method where the tested sample is made only from the material to be characterized (viscoanalyzer).

Large panels as floors, walls, doors, windows in the building construction industry, or doors, roof, hood in the automotive industry have airborne sound insulation that is mainly controlled by their densities. This is well known in the acoustic world as the "mass-law": the sound insulation (Sound Transmission Loss or STL) is proportional to the area weight (area weight = density x thickness of the panel). This "mass-law" is valid under the assumption that the modal density (the number of vibration modes of the panel) is high. In other words, the "mass-law" is true when the number of vibration modes is sufficiently large not to be able to separate them. This happens when the sizes of the panels are large (> 1 m).

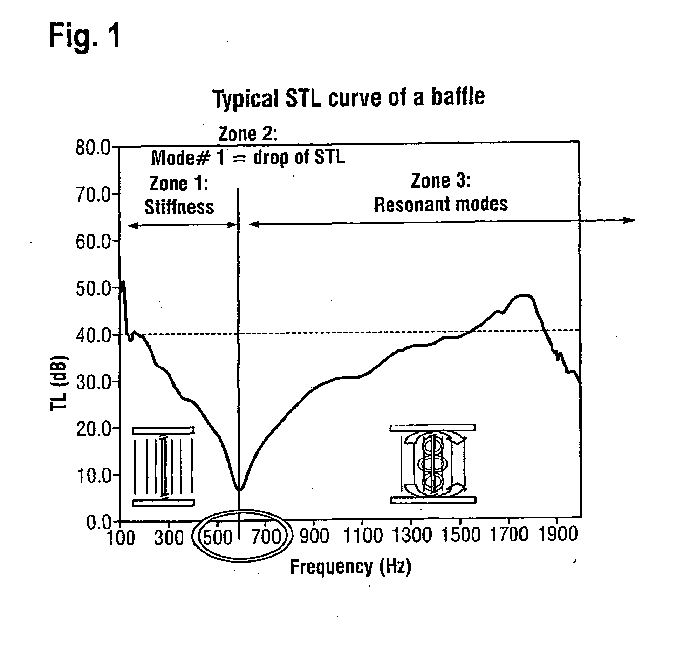

On the opposite, cavity sections of car bodies have small sizes (< 0.2 m). The baffles (or block of foams) used to seal these cavities have also small sizes. Thus, they have a low modal density. This makes the "mass-law" invalid. In the special case of baffles, the STL is closely related to the vibration resonance modes of the system. The most disturbing frequency is the first resonant frequency of the baffles occurring at the first resonant mode. As shown in figure 1, the STL curve of a typical baffle depicts three zones. The first zone is the stiffness-controlled zone in the low frequency range where the STL performance is good. Zone 2 is the frequency range close to the first resonant frequency. Here a dramatic drop of the STL is observed. In zone 3, above the first resonant frequency, the STL is controlled by the higher modes (2^{nd} mode, 3^{rd} mode...). Usually the STL drop for these modes is not an issue.

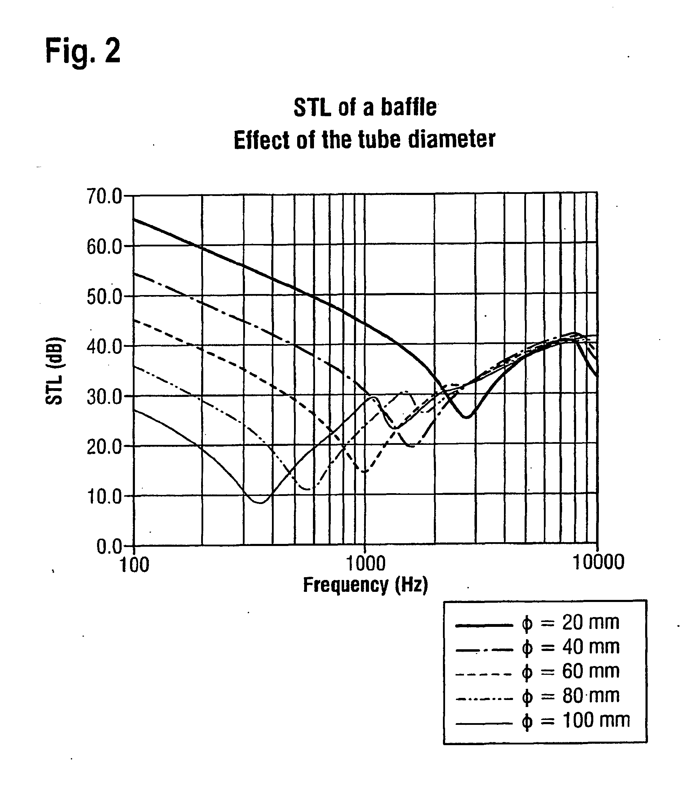

The aim of the present invention is to improve the STL of the baffles (especially based on high expansion materials). It has been found that this can be done by changing the dimensions of the sections wherein the material is expanding. Basically, for the same filling length, expanding foams have better STL in small cross sections. For small sections, the baffle is stiffer and its first resonant mode appears at higher frequency. Thus, the amplitudes of the vibrations are lower and the minimum value of the STL is higher. Figure 2 shows the STL performance of the same baffle design for decreasing sizes of the cavity.

EP 1 122 156 A2 discloses a reinforcing member fulfilling the parameters of the preamble of claim 1.

Based on these observations, the gist of the present invention is to divide a large cavity into at least three smaller cavities using a special design of the carrier for a thermally expandable material. The plate-like carrier is not placed perpendicular to the section axis (i.e. in the plane of the cross-section) like for pillar fillers, but parallel to the section axis. For example, a cross-shaped design divides the section in four subsections, and so on. There is an infinite number of embodiments (carrier plate designs) of this invention.

Thus, the present invention provides a member as defined by the features of claim 1 (allowing for the pores of the foamed material, but excluding channels in the direction of the cavity axis).

A longitudinal cavity is formed by interconnected walls (e.g. two prefabricated half-shells joined together) and has a three-dimensional extension, usually in the form of a straight or bent channel. Examples of such cavities are the hollow spaces within the pillars or other support frames of a vehicle. The insert is located essentially completely inside the cavity, with the possible exception of fasteners which may penetrate a wall of the cavity for fixing the insert prior to expanding the heat expandable material.

A "longitudinal cavity axis" means an axis (which may be straight or bent) which is as least twice as long as the longest extension perpendicular to this longitudinal cavity axis. In other words, the cavity has a longitudinal extension which is at least twice as long as the longest cavity diameter perpendicular to the longitudinal direction. The cavity may be bent, so that the "longitudinal cavity axis" is bent as well. "Parallel to the longitudinal cavity axis" means in this case: "following the curvature of the longitudinal cavity axis". In a vehicle, typical examples of components having a (straight or bent) longitudinal cavity inside include the upwardly extending A-, B- and C-pillars supporting the roof structure, the roof rail, portions of the fenders, or the sill.

The carrier "plate" in the sense of this invention may be flat or bent. A plate is defined as a structure having a thickness in a direction of minimum extension (called the "plate axis") which is at most 20 % of the length of the structure in the direction of its maximum length, and at most 25 % of the minimum width of the structure in a direction perpendicular to the "plate axis". Ideally, the plate is flat, with the possible exception of fixing elements which might stick out of the plate. However, the plate may also be bent or undulated. The "plate axis" is the axis standing perpendicular to the plate surface. In the case of a bent plate, there is a range of "plate axes" which are all perpendicular to the longest dimension of the plate.

The carrier plate can be made of a material used in the state of the art for conventional baffles. It must not deform when heated to the expansion and curing temperature of the thermally expandable material, which may be as high as 220 °C.

The carrier may be made of metal. Preferred metals are steel, particularly galvanized steel, and aluminum. The carrier may also be made of a synthetic material, which may optionally be fiber reinforced (e.g., with glass fibers) and/or reinforced with other types of fillers. Preferred synthetic materials are thermoplastic synthetic materials having a low water absorption and dimensionally stable up to at least 180°C. Suitable thermoplastic synthetic materials may, for example, be selected within the group consisting of polyamides (PA), polyphenylene sulphides (PPS), polyphenylene ethers (PPE), polyphenylene sulfones (PPSU), polyether imides (PEI) and polyphenylene imides (PPI). Thermoset synthetic materials such as molding compounds, rigid polyurethanes, and the like may also be used to construct the carrier. The carrier may be formed into the desired shape by any suitable method, such as, for example, molding (including injection molding), stamping, bending, extrusion and the like.

Preferably, the carrier is relatively stiff. In one embodiment, the carrier is at least as stiff at room temperature as the structural element into which the insert will be inserted.

The carrier plate s preferably comprised of a moldable material which is sufficiently resistant to cracking and breakage during normal usage, and has a melting or softening point that is higher than both the activation temperature of the expandable composition and the bake temperature that the structural members containing the cavity filler insert will be exposed to. Preferably, the moldable material is sufficiently resilient (non-brittle) and strong at ambient temperatures to withstand cracking or breaking while also being sufficiently heat resistant at elevated temperatures (e.g., the temperatures employed to foam the expandable material) to hold the expandable material in the desired position within the cavity of the structural member without significant warping, sagging or distortion. For example, the carrier plate may be formed of a moldable material that is somewhat pliable and resistant to breaking so that the assembled cavity filler insert can be subjected to bending forces at room temperature without being cracked or permanently deformed. Preferably, the carrier material has a melting or softening point (ASTM D789) of at least 220 degrees C, more preferably at least 225 degrees C, or most preferably at least 250 degrees C and/or has a heat deflection temperature at 18.6 kg (ASTM D648) of at least 180 degrees C, more preferably at least 200 degrees C, or most preferably at least 220 degrees C and/or a tensile strength (ASTM D638; 50% R.H.) of at least 1000 kg/cm², more preferably at least 1200 kg/cm², most preferably at least 1400 kg/cm² and/or a flexural modulus (ASTM D790; 50% R.H.) of at least 50,000 kg/cm², more preferably at least 60,000 kg/cm², most preferably at least 70,000 kg/cm². Preferably, the insert has at least one attachment member capable of holding said cavity filler insert in a predetermined position within said hollow structure. Any fastener design may be used which is known for baffles of the state of the art, like the various types of clipses which are inserted into bore holes of the cavity walls. Or the insert may be riveted, welded or glued to the inside surface of a cavity wall.

Thus, in a preferred embodiment, the insert comprises at least one attachment member or fastener for securing the insert in the cavity. Any of the devices known in the art to be capable of securing a carrier bearing an expandable material to the interior wall of a structural member cavity may be utilized as an attachment member in the cavity filler insert of the present invention, and the selection of a particular design is not believed to be particularly critical. For example, the attachment member may include two or more resiliently deflectable barbs configured for secured receipt in an opening in the structural member. Each barb may comprise a shank bearing a retaining piece that protrudes at an angle to the shank so as to form a hook. Such an attachment member is inserted into the cavity wall opening with application of minor force, causing the barbs reversibly bend together and towards each other. After the barbs have passed through the opening, they return to their normal position apart from each other. This allows the retaining pieces to engage with the outer surface of the structural member wall around the periphery of the opening, thereby preventing the attachment member from being readily withdrawn through the opening and securing the cavity filler insert within the cavity. Affixing the insert in this manner so as to prevent it from being easily displaced is highly desirable, since otherwise the handling that the structural member will normally encountered during assembly of the vehicle prior to heating and activating the expandable material is likely to cause the insert to no longer be properly positioned in the desired location within the cavity.

Other types of attachment members may also be used for this purpose, including, for example, a "Christmas tree"-type fastener (typically fabricated of a resilient plastic) having an elongated portion with multiple angled flanges. The cavity filler insert may have one attachment member or a plurality of attachment members, of the same type or different types.

Typically, the attachment member projects radially from one plate of the insert and may be generally parallel to one plate of the insert. If the insert is fabricated by moulding, the attachment members (fasteners) are preferably made of the same material as the carrier plate, and are integrally moulded together with the carrier plate in the same injection moulding step.

When inserted into the cavity, the longitudinal edges of the carrier plates have a distance from the closest cavity wall which is not greater than about 10 mm. Preferably this distance is not greater than about 8 mm, especially not greater than about 6 mm. Distances of from about 1 to about 4 mm are not only tolerated, but have even the advantage that process liquids like cleaners, surface treatment and coating agents can flow freely through the cavity and come in touch with the interior walls of the cavity before the heat expandable material is foamed so that the cavity is blocked. This can be achieved by suitable dimensions of the fasteners, possibly with the additional aid of spacers protruding from the carrier plate(s). Alternatively, the longitudinal edges of the carrier plate(s) may touch the interior walls of the cavity, and may even press against them by elastic deformation of the carrier plate(s). In this case, no fasteners are needed to keep the inserts at their predetermined position within the cavity.

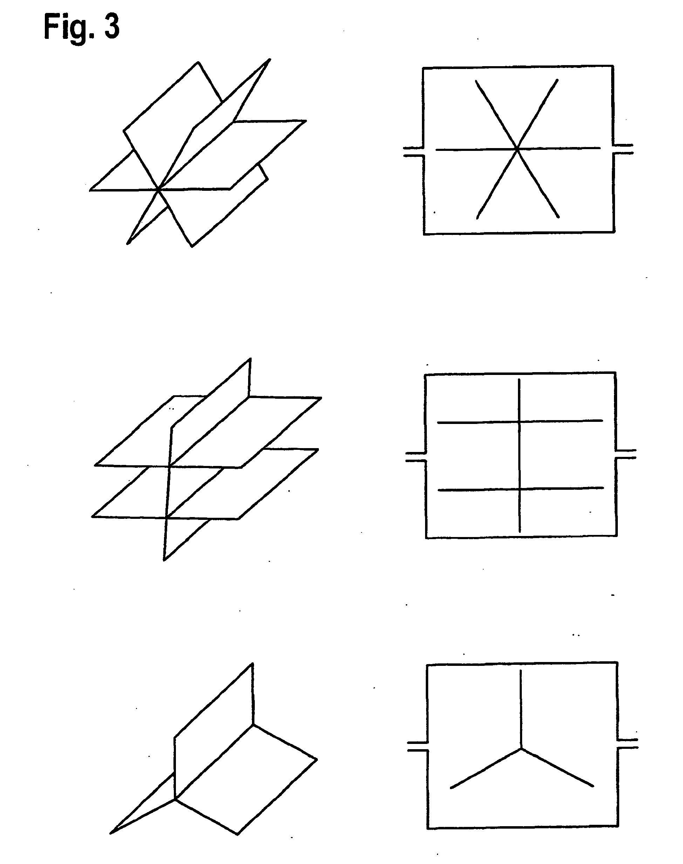

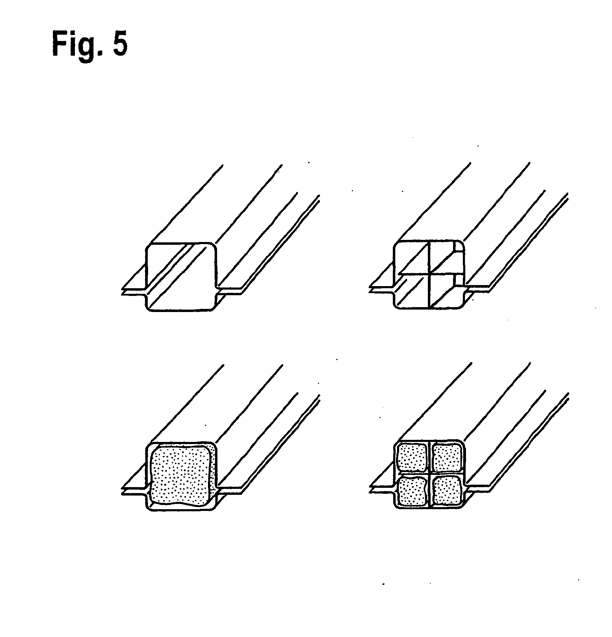

In one embodiment, the insert consists of three carrier plates joined together at a common edge (cf. Fig. 3, bottom) dividing the cavity into three subsections which are parallel to the longitudinal cavity axis, the surfaces of the carrier plate being covered with said thermally expandable material in a way that each of the three subsections will be filled with the foamed thermally expandable material after heating, the longitudinal edges of the carrier plates being longer than the longest diagonal of the three subsections perpendicular to the longitudinal cavity axis. In an alternative embodiment, the insert consists of at least two carrier plates intersecting (which is equivalent to four carrier plates joining) along one or more line(s) parallel to the longitudinal cavity axis, dividing the cavity into at least four subsections which are parallel to the longitudinal cavity axis (cf. Fig. 5), the longitudinal edges of the carrier plates being longer than the longest diagonal of all subsections perpendicular to the longitudinal cavity axis. In both embodiments, the requirement that the longitudinal edges of the carrier plates are longer than the longest diagonal of all subsections perpendicular to the longitudinal cavity axis means that the filling length is larger than the cross section of the largest subsection of the cavity. This is a contrast to classical baffles of the state of the art which usually are essentially "flat", i.e. their extension in the direction of the longitudinal axis of the cavity to be sealed is smaller that their extension perpendicular to the longitudinal cavity axis.

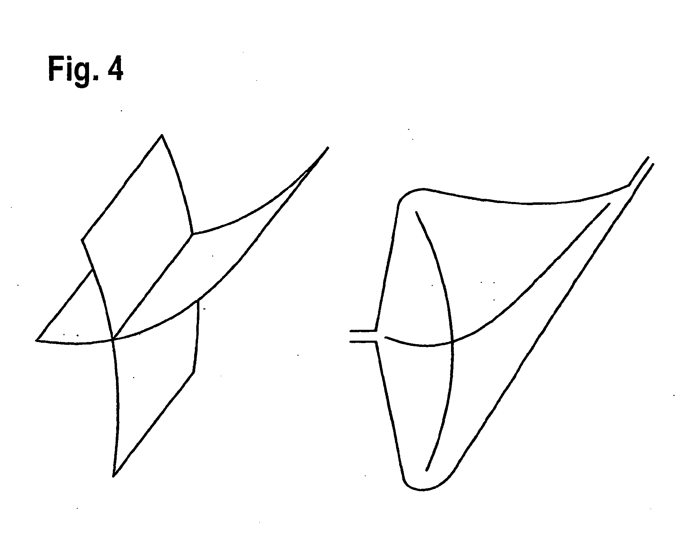

Several possible designs of cavity filler inserts according to the present invention, and cross sections of longitudinal cavities containing these cavity filler inserts are shown in the figures 3 and 4. The figures show in the left column perspective views of other designs for the carrier plates. The layers of thermally expandable material are not shown for clarity. The right column shows end views onto a hollow structure having a cavity, with the carrier structure of the insert of the left column inserted into the cavity. Figure 3 shows embodiments with "planar" plates of the carrier, figure 4 shows an example of a carrier structure consisting of bent plates.

Figure 5 shows the design used in a practical test of the present invention. Top left is a perspective view of an empty pillar, bottom left the pillar filled with expanded foam. Top right is the same pillar as in top left, with a carrier structure consisting of two rectangularly intersecting plates inserted into the interior of the pillar. The layers of thermally expandable material on the plates are omitted for clarity. Bottom right shows the pillar with the insert of top right after expanding the thermally expandable material. Instead of one big void filled with foam (bottom left), four smaller voids filled with foam are formed.

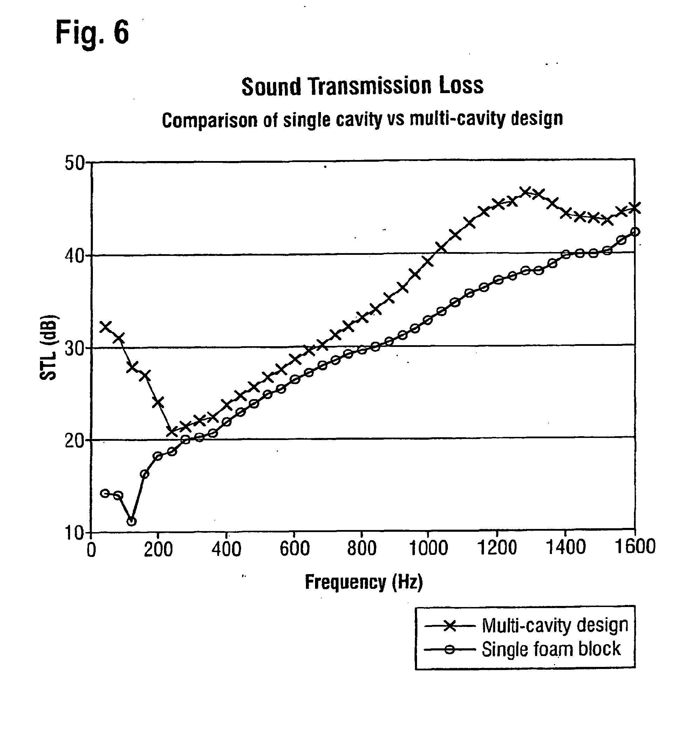

Figure 6 shows the result of a measurement of the sound transmission loss (STL) for the structure of Figure 5, bottom left (comparison), and for the structure of bottom right (according to the invention). The same foamable material in the same amounts and the same foaming conditions have been used in both cases. The improvement of the STL for the structure according to the invention is clearly seen.

Of course, the scope of the present invention is not restricted to these figures, and the expert may easily adopt the design of a cavity filler insert according to the present invention to fit the special requirements.

The size and shape of a cavity filler insert according to the present invention may be adapted to the size and shape of the cavity. For example, the longitudinal edges of the carrier plates may have a length in the range of from 20 to 200 mm. For extremely large cavities, the carrier plates may be longer than 200 mm.

The thickness of the layer of the expandable material depends from the chosen expansion rate, and from the size of the hollow section which has to be filled by the foamed material. Therefore, it has to be adapted according to the actual requirement. Preferably, the thickness of the carrier plates (perpendicular to the plate surfaces) and the thickness of the thermally expandable material of the insert are selected in such a way that, after the expansion of the thermally expandable material, the combined area of the expanded material and the area of the combined cross sections of the carrier plates perpendicular to the longitudinal axis have a ratio of at least 10 : 1, preferably at least 50 : 1. This means that after foaming the cross-section of the cavity is mainly filled with the foamed thermally expandable material, whereas before foaming it is filled by at most 20 %, meaning that before foaming the the cavity is to at least 80 % of its cross-section empty.

In general, the layer of the thermally expandable material will essentially completely cover the complete plate surface. Preferably, the layer of the expandable material covering a plate surface begins at a distance not greater than 5 mm from the front edge, and ends at a distance not greater than 5 mm from the rear edge of the carrier plate. Of course, these distances may be larger, but this results in reduced efficiency.

The thermally expandable material is selected such that it expands by at least 1000 %, preferably by at least 1500 %, and especially by at least 2000 % when heated at a temperature in the range from 130 to 220 °C. Generally, the material will comprise:
at least one base polymer;
at least one latent blowing agent in an amount and of a nature that the required expansion rate is reached. Usually, this requires an amount of blowing agent in the range of 6 to 20 %, especially 8 to 17 % by weight, based on the total weight of the composition.

Depending on the reactivity of the base polymer, the thermally expandable material may additionally comprise at least one latent curing agent.

Generally speaking, it will be desirable to use a thermoplastic elastomer that has a softening point no higher than the temperature at which the blowing agent begins to be activated, preferably at least about 30 degrees C lower than the temperature that the expandable material will be exposed to when it is to be expanded. The thermoplastic elastomer is preferably selected within the group consisting of thermoplastic polyurethanes (TPU) and block copolymers (including linear as well as radial block copolymers) of the A-B, A-B-A, A-(B-A)ₙ₋₂-B, A-(B-A)ₙ₋₁ and (A-B)ₙ-Y types, wherein A is an aromatic polyvinyl ("hard") block and the B block represents a rubber-like ("soft") block of polybutadiene, polyisoprene or the like, which may be partly or completely hydrogenated, Y is a polyfunctional compound and n is an integer of at least 3. The blocks may be tapered or gradient in character or consist entirely of one type of polymerized monomer.

Hydrogenation of the B block removes originally present double bonds and increases the thermal stability of the block copolymer. Such copolymers may be preferred in certain embodiments of the present invention.

Suitable block copolymers include, but are not limited to, SBS
(styrene/butadiene/styrene) copolymers, SIS (styrene/isoprene/styrene) copolymers, SEPS (styrene/ethylene/propylene/styrene) copolymers, SEEPS (styrene/ ethylene/ethylene/propylene/styrene) or SEBS (styrene/ethylene/butadiene/styrene) copolymers.

Especially suitable block copolymers include styrene/isoprene/styrene triblock polymers, as well as fully or partially hydrogenated derivatives thereof, in which the polyisoprene block contains a relatively high proportion of monomer moieties derived from isoprene having a 1,2 and/or 3,4 configuration. Preferably, at least about 50% of the polymerized isoprene monomer moieties have 1,2 and/or 3,4 configurations, with the remainder of the isoprene moieties having a 1,4 configuration. Such block copolymers are available from Kuraray Co., Ltd. under the trademark HYBRAR.

With a view to achieving a sufficient foaming capacity and expandability, these polymer compositions also contain blowing agents. Suitable, in principle, by way of blowing agents are all known blowing agents such as, for example, the "chemical blowing agents" which release gases as a result of decomposition or "physical blowing agents", i.e. expanding hollow beads. Examples of the first-mentioned blowing agents are azobisisobutyronitrile, azodicarbonamide, dinitroso pentamethylenetetramine, 4,4'-oxybis(benzenesulfonic acid hydrazide), diphenylsulfone-3,3'-disulfohydrazide, benzene-1,3-disulfohydrazide, p-toluene sufonylsemicarbazide. Examples of the physical blowing agents are expandable plastic hollow microbeads based on polyvinylidene-chloride copolymers or acrylonitrile/(meth)acrylate copolymers, such as are commercially available, for example, under the names "Dualite®" and "Expancel®" from Pierce & Stevens and Casco Nobel, respectively. Preferably, the heat expandable material has an activation temperature above 120 °C and below 200°C.

Additional thermally expandable materials which form acoustic absorbing foams after expansion and curing are known in the state of the art. Examples can be found in the documents quoted in the introduction. Such materials are available, for example, from the present applicant under the trade mark of "Terophon^{™}".

For example, another suitable material comprises, in % by weight:

| | |
|---|---|
| 8 to 15 % | of butyl rubber, |
| 20 to 40 % | of polyolefins, preferably selected from polyisobutylene, polybutene, or mixtures thereof, |
| 10 to 15 % | of aliphatic hydrocarbon resin, |
| 2 to 10 % | of formaldehyde resin, |

Blowing agent in the range of 6 to 20 %, especially 8 to 17 % by weight, based on the total weight of the composition.
the remainder to 100 % being fillers selected from, for example, barium sulphate, calcium oxide, calcium carbonate, muscovite, quarz, and carbon black

Alternatively, the sound damping material may comprise, in % by weight:
40 to 70 % of polyolefins, preferably selected from polyisobutylene, polybutene, or mixtures thereof,
Blowing agent in the range of 6 to 20 %, especially 8 to 17 % by weight, based on the total weight of the composition.
the remainder to 100 % being fillers selected from, for example, barium sulphate, calcium oxide, calcium carbonate, muscovite, quarz, and carbon black

Furthermore, the sound damping materials described in the working examples of EP 697277 or EP 617098 may be used for the present invention. The amount of blowing agent may have to be adapted to be in the range of 6 to 20 %, especially 8 to 17 % by weight, based on the total weight of the composition.

A further example of a material which can be used as the foamable material for the present invention comprises: styrene butadiene rubber (20-25% styrene), aliphatic hydrocarbon resin, fillers, blowing agents, and, preferably, an activator for the blowing agent, e.g. urea. The fillers may be selected from one ore more of: magnesium silicate hydrate, zinc oxide, clay, limestone, carbon black. Adjuvants like wax, fatty acids, e.g. stearic acid, solvents, substituted thiuram disulfide may also be present. Solvents may comprise, e.g., aliphatic oils, naphthenic oils, hydrotreated naphthenic distillates.

They main components may be present, in % by weight relative to the complete unfoamed composition, in the following ranges:
15 to 30 % styrene butadiene rubber (20-25% styrene),
25 - 40 % aliphatic hydrocarbon resin (tackifier),
6 - 20 % blowing agent(s),
2 to 6 % clay treated wax,
the remainder to 100 % being selected from fillers, activators for the blowing agents, solvents, and other adjuvants. Preferably, the composition contains from 20 to 40 % fillers. Solvents like aliphatic oils, naphthenic oils, hydrotreated naphthenic distillates may be present in the range of from 5 to 15 %.

In another embodiment, the thermally expandable material comprises:
- from 25 to 70% by weight, preferably from 35 to 55% by weight, of at least one thermoplastic elastomer (preferably a styrene/butadiene or styrene/isoprene block copolymer or at least partially hydrogenated derivative thereof);
- from 15 to 40% by weight, preferably from 20 to 35% by weight, of at least one non-elastomeric thermoplastic (preferably an ethylene/vinyl acetate or ethylene/methyl acrylate copolymer);
- from 0.01 to 2% by weight, preferably from 0.05 to 1 % by weight, of at least one stabilizer or antioxidant;
- from 6 to 20 % by weight of at least one blowing agent, preferably an amount effective to cause the expandable material to expand at least 100% in volume when heated at a temperature of 150 degrees C;
- from 0.5 to 4% by weight of one or more curing agents, optionally including from 0.5 to 2% by weight of at least one olefinically unsaturated monomer or oligomer, and optionally;
- up to 10% by weight (e.g., 0.1 to 10% by weight) of at least one tackifying resin;
- up to 5% by weight (e.g., 0.1 to 5% by weight) of at least one plasticizer;
- up to 10% by weight (e.g., 0.1 to 10% by weight) of at least one wax;
- up to 3% by weight (e.g., 0.05 to 3% by weight) of at least one activator for the blowing agent;
as well as optionally at least one filler (although the amount of filler is preferably less than 10% by weight, more preferably less than 5% by weight), the percentages being expressed as weight percentages of the total weight of the thermally expandable material.

In a further embodiment, a thermally expandable material usable in the present invention comprises:
a) from 5 to 20 % by weight of a first thermoplastic elastomer selected from the group consisting of thermoplastic polyurethanes, styrene/butadiene block copolymers, hydrogenated styrene/butadiene block copolymers, styrene/isoprene block copolymers, and hydrogenated styrene/isoprene block copolymers, which has a glass transition temperature in the range from -25 to 0.0 °C,
b) from 15 to 40 % by weight of a second thermoplastic elastomer selected from the group consisting of thermoplastic polyurethanes, styrene/butadiene block copolymers, hydrogenated styrene/butadiene block copolymers, styrene/isoprene block copolymers, and hydrogenated styrene/isoprene block copolymers, which has a glass transition temperature in the range from 0.1 to 30 °C,
c) from 10 to 25% by weight of at least one thermoplastic polymer selected from the group consisting of ethylene/vinyl acetate copolymers and ethylene/methyl acrylate copolymers,
d) from 2 to 10% by weight of at least one tackifying resin,
e) at least one latent chemical blowing agent in an amount effective to cause the expandable material to expand at least 1000% in volume when heated at a temperature of 150 °C for at least 20 minutes,
f) from 0.5 to 4% by weight of at least one curing agent (for example based on peroxides or on sulfur and/or sulfur compounds),
wherein the sum of components a) to f) is less than 100 % by weight, and the remainder to 100 % by weight is made up of further components or adjuvants.

In this embodiment, the thermoplastic elastomers a) and b) are preferably both selected from styrene/isoprene/styrene tri-block copolymers (SIS), and hydrogenated styrene/isoprene/styrene tri-block copolymers. The non-hydrogenated tri-block copolymers are especially preferred. The styrene content is preferably in the range of 15 to 25 %, more preferably in the range of 19 to 21 %. Suitable materials are: Hybrar® 5127 for the thermoplastic elastomer a), and Hybrar® 5125 for the thermoplastic elastomer b), both available from Kuraray.

The thermoplastic polymer c) is preferably an ethylene/vinyl acetate copolymer. Its vinyl acetate content preferably is in the range of 24 to 32 %, more preferably in the range of 27 to 29 %.

The tackifying resin d) may be selected within the group consisting of rosin resins, terpene resins, terpene phenolic resins, hydrocarbon resins derived from cracked petroleum distillates, aromatic tackifying resins, tall oil resins, ketone resins and aldehyde resins. Suitable rosin resins are abietic acid, levopimaric acid, neoabietic acid, dextropimaric acid, palustric acid, alkyl esters of the aforementioned rosin acids, and hydrogenation products of rosin acid derivatives. Preferably, it is selected from aliphatic hydrocarbon resins. The molecular weight (number average) may be in the range of 1000 to 2000. The softening point (measured according to ASTM D-6090-97) may be in the range of 95 to 105 °C. A suitable material is Escorez® 1102 of ExxonMobile.

All known blowing agents, such as "chemical blowing agents" which liberate gases by decomposition or "physical blowing agents", i.e., expanding hollow beads (also sometimes referred to as expandable microspheres), are suitable as blowing agent e) in the present invention. Mixtures of different blowing agents may be used to advantage; for example, a blowing agent having a relatively low activation temperature may be used in combination with a blowing agent having a relatively high activation temperature.

Examples of "chemical blowing agents" include azo, hydrazide, nitroso and carbazide compounds such as azobisisobutyronitrile, azodicarbonamide, di-nitroso-pentamethylenetetramine, 4,4'-oxybis(benzenesulfonic acid hydrazide), diphenylsulfone-3,3'-disulfohydrazide, benzene-1,3-disulfohydrazide and p-toluenesulfonyl semicarbazide. An especially preferred blowing agent is azodicarbonamide.

"Chemical blowing agents" may benefit from the presence of additional catalysts or activators such as zinc compounds (e.g., zinc oxide), (modified) ureas and the like.

However, "physical blowing agents" and particularly expandable hollow microbeads (sometimes referred to as microspheres) are also useable. Advantageously, the hollow microbeads are based on polyvinylidene chloride copolymers or acrylonitrile/ (meth)acrylate copolymers and contain encapsulated volatile substances such as light hydrocarbons or halogenated hydrocarbons.

Suitable expandable hollow microbeads are commercially available, e.g., under the trademarks "Dualite" and "Expancel" respectively, from Pierce & Stevens (now part of Henkel Corporation) or Akzo Nobel, respectively.

The blowing agent will be present in the range of 6 to 20 %, especially 8 to 17 % by weight, based on the total weight of the composition.

The curing agent f) is preferably a peroxide or a mixture of elemental sulfur and at least one organic di- or polysulfide. The preferred organic sulfide is tetramethylthiuram disulfide.

Preferably, one or more of components a) to f) is or are present in the following amounts:
a): from 8 to 16 % by weight
b): from 20 to 35% by weight
c): from 12 to 20 % by weight
d): from 3 to 8 % by weight
e): from 6 to 20 % by weight
f): from 0.7 to 2 % by weight

The composition used in this embodiment of the present invention also comprises one ore more further components or adjuvants, preferably selected from one ore more of:
g) from 10 to 30 % by weight fillers,
h) from 2 to 10 % by weight plasticizer,
i) from 1 to 5 % by weight curing catalyst,
k) from 0.05 to 3 % by weight anti-oxidant and/or stabilizer,
I) from 0.05 to 3 % by weight accelerator agent,
m) from 1 to 5 % by weight urea.

Examples of suitable fillers g) include ground and precipitated chalks, talc, calcium carbonate, carbon black, calcium-magnesium carbonates, barite, clay, mica, and silicate fillers of the aluminum-magnesium-calcium type, such as wollastonite and chlorite. The filler particles may have a particle size in the range of 25 to 250 µm. The total amount of filler may be in the range from 15 to 25 % by weight. However, it may also be limited to less than 10% by weight, even less than 5% by weight. In one embodiment, the expandable material contains no filler (defined herein as substantially inorganic particles, such as particles of the materials mentioned above).

Examples of suitable plasticizers h) include C₁₋₁₀ alkyl esters of dibasic acids (e.g., phthalate esters), diaryl ethers, benzoates of polyalkylene glycols, organic phosphates, and alkylsulfonic acid esters of phenol or cresol. For example, diisononylphthalate may be used as plasticizer.

Zinc oxide, optionally in activated form, is preferably used as the curing catalyst i).

Suitable antioxidants and stabilizers k) include sterically hindered phenols and/or thioethers, sterically hindered aromatic amines and the like. Phenolic anti-oxidants are preferred.

Suitable accelerator agents I) may be selected from thiazoles and sulfenamides. It is especially preferred to use N-N'-dicyclohexyl-2-benzothiazolesulfenamid in combination with 2-mercaptobenzothiazole.

The present invention also comprises an insert as described herein before, which is structured and formed in a way that it can be inserted into a longitudinal cavity of a member in order to result in the member having a longitudinal cavity filled with an insert according to the present invention.

Furthermore, the invention includes a member comprising a longitudinal cavity formed by interconnected cavity walls and having a longitudinal cavity axis, said member containing:
an insert for acoustic damping which is obtained by heating the member of at least one of claims 1 to 6 at a temperature in the range from 130 to 220 °C, so that the thermally expandable material of the insert has been transformed to the expanded state, and also a vehicle comprising such a member.

Furthermore, the present invention comprises a method for manufacturing an insert as described herein before, comprising the steps of:
- extruding a strand of the the two or more intersecting carrier plates in a direction parallel to their longitudinal edges ,
- cutting the extruded strand at the desired lengths of the longitudinal edges of the carrier plate(s),
- extruding a flat strand of the thermally expandable material in a direction parallel to the longitudinal edge of a carrier plate with a width corresponding to the dimension of a selected carrier plate surface which has to be covered by the thermally expandable material,
- cutting the strand of the thermally expandable material at the desired length to cover the selected carrier plate surface,
- fixing the cut strand(s) of the thermally expandable material onto the selected carrier plate surface(s). This can be done e.g. by gluing or by self-adhesion if the material is tacky, possibly in a warm state.

Alternatively, the present invention comprises a method for manufacturing an insert as described herein before, comprising the steps of:
- co-extruding in one or two steps a strand of the two or more intersecting carrier plates in a direction parallel to their longitudinal edges, and the appropriate number of flat strands of the thermally expandable material, in a direction parallel to the longitudinal edge of a carrier plate in a way that the strands of the thermally expandable material become connected with the corresponding surface of the carrier plate, and
- cutting the co-extruded strands at the desired lengths of the longitudinal edges of the carrier plates

In yet another aspect, the present invention comprises a method of damping air- and structure-borne vibration in a longitudinal cavity formed by interconnected cavity walls, said method comprising:
a) placing an insert according to claim 7 in a predetermined position within said longitudinal cavity so that a member according to at least one of claims 1 to 6 is obtained, and
b) heating said thermally expandable material to a temperature effective to cause said thermally expandable material to expand and come into contact with the interior surfaces of said cavity, thereby sealing off said cavity.

### Figure Captions

Figure 1
   Schematic sound transmission loss (STL) curve of a baffle (or pillar filler) as a function of frequency.
Figure 2
   Sound transmission loss curves of baffles (or pillar fillers) of the same design, but of different cross sections adapted to different diameters of the tubes to be sealed.
Figure 3
   The figure shows in the left column perspective views of three other designs for the carrier plates. The layers of thermally expandable material are not shown for clarity. The right column shows end views onto a hollow structure having a cavity, with the carrier structure of the insert of the left column inserted into the cavity. Figure 3 shows embodiments with "planar" plates of the carrier.
Figure 4
   This figure corresponds to figure 3 and shows an example of a carrier structure consisting of bent plates.
Figure 5
   Top left is a perspective view of an empty pillar, bottom left the pillar filled with expanded foam. Top right is the same pillar as in top left, with a carrier structure consisting of two rectangularly intersecting plates inserted into the interior of the pillar. The layers of thermally expandable material on the plates are omitted for clarity. Bottom right shows the pillar with the insert of top right after expanding the thermally expandable material.
Figure 6
   Figure 6 shows the result of a measurement of the sound transmission loss (STL) for the structure of Figure 5, bottom left (comparison, lower curve), and for the structure of bottom right (according to the invention, upper curve).

## Claims

1. A member comprising a longitudinal cavity formed by interconnected cavity walls and having a longitudinal cavity axis, said member containing:
an insert for acoustic damping comprising:
a) two or more carrier plates which
a1) do not have channels in the direction of the longitudinal cavity axis and which
a2) are made of a material which is inert when heated to a temperature not higher than 220 °C,
a3) each carrier plate having two plate surfaces, a longitudinal edge running essentially parallel to the longitudinal cavity axis, and a front and a rear edge running essentially perpendicular to the longitudinal cavity axis,
a4) the two or more carrier plates joining or intersecting along one or more line(s) parallel to the longitudinal cavity axis, dividing the cavity into at least three subsections which are parallel to the longitudinal cavity axis, the longitudinal edges of the carrier plates being longer than the longest diagonal of the subsections perpendicular to the longitudinal cavity axis
a4) fixed in the longitudinal cavity in a way that the longitudinal edges of the two or more carrier plates are parallel to the longitudinal cavity axis,
a5) the area of the combined cross sections of the carrier plates and of the expandable material perpendicular to the longitudinal axis being at most 20 %, of the area of the corresponding cross section of the cavity,
b) whereby the thermally expandable material is selected such that it expands by at least 1000 % when heated at a temperature in the range of from 130 to 220 °C, **characterised in that**
a6) within each subsection, at least one of the carrier plate surfaces limiting the subsection is covered with a layer of a thermally expandable material,
c) and whereby the thickness of the thermally expandable material on the carrier plates and the area that it covers on each carrier plate are chosen in a way that, after expansion, the cross section of the longitudinal cavity is completely filled with the carrier plates and the expanded material along a length parallel to the longitudinal cavity axis which is at least as long as the longest diagonal of the subsections perpendicular to the longitudinal cavity axis.

2. The member of claim 1 wherein the longitudinal edges of the carrier plates of the insert have a length in the range of from 20 to 200 mm.

3. The member of at least one of claims 1 and 2 wherein the size of the two or more carrier plates of the insert is selected such that the longitudinal edges of the two ore more carrier plates have a distance from the closest cavity wall which is not greater than 10 mm.

4. The member of at least one of claims 1 to 3 wherein the thickness of the carrier plates and the thickness of the thermally expandable material of the insert is selected in such a way that, after the expansion of the thermally expandable material, the combined area of the expanded material and the area of the combined cross sections of the carrier plates perpendicular to the longitudinal axis have a ratio of at least 10:1, preferably at least 50:1.

5. The member of at least one of claims 1 to 4 wherein the layer of the expandable material covering a plate surface of the insert begins at a distance not greater than 5 mm from the front edge, and ends at a distance not greater than 5 mm from the rear edge of the carrier plate.

6. The member of at least one of claims 1 to 5 wherein the thermally expandable material of the insert expands by at least 1500 % when heated at a temperature in the range from 130 to 220 °C.

7. An insert for acoustic damping with such a structure and shape that it can be used as the insert of the member of at least one of claims 1 to 6.

8. A member comprising a longitudinal cavity formed by interconnected cavity walls and having a longitudinal cavity axis, said member containing:
an insert for acoustic damping which is obtained by heating the member of at least one of claims 1 to 6 at a temperature in the range from 130 to 220 °C, so that the thermally expandable material of the insert has been transformed to the expanded state.

9. A vehicle comprising a member according to claim 8.

10. A method for manufacturing an insert according to claim 7, comprising the steps of:
- extruding a strand of the two or more intersecting carrier plates in a direction parallel to their longitudinal edges,
- cutting the extruded strand at the desired lengths of the longitudinal edges of the carrier plate(s),
- extruding a flat strand of the thermally expandable material in a direction parallel to the longitudinal edge of a carrier plate with a width corresponding to the dimension of a selected carrier plate surface which has to be covered by the thermally expandable material,
- cutting the strand of the thermally expandable material at the desired length to cover the selected carrier plate surface, and
- fixing the cut strand(s) of the thermally expandable material onto the selected carrier plate surface(s).

11. A method for manufacturing an insert according to claim 7, comprising the steps of:
- co-extruding in one or two steps a strand of the two or more intersecting carrier plates in a direction parallel to their longitudinal edges, and the appropriate number of flat strands of the thermally expandable material, in a direction parallel to the longitudinal edge of a carrier plate in a way that the strands of the thermally expandable material become connected with the corresponding surface of the carrier plate, and
- cutting the co-extruded strands at the desired lengths of the longitudinal edges of the carrier plates.

12. A method of damping air- and structure-bome vibration in a member comprising a longitudinal cavity formed by interconnected cavity walls, said method comprising:
a) placing an insert according to claim 7 in a predetermined position within said longitudinal cavity so that a member according to at least one of claims 1 to 6 is obtained, and
b) heating said thermally expandable material to a temperature effective to cause said thermally expandable material to expand and come into contact with the interior surfaces of said cavity, thereby sealing off said cavity.

## Patentansprüche

1. Element, aufweisend einen Längshohlraum, der durch miteinander verbundene Hohlraumwände gebildet ist und eine Längshohlraumachse hat, wobei das Element aufweist:
einen Einsatz zur akustischen Dämpfung, aufweisend:
a) zwei oder mehr Trägerplatten, welche
a1) keine Kanäle in Richtung der Längshohlraumachse aufweisen, und welche
a2) aus einem Material gefertigt sind, welches bei Erwärmung auf eine Temperatur nicht höher als 220 °C inert ist,
a3) wobei jede Trägerplatte zwei Plattenoberflächen aufweist, wobei eine Längskante im Wesentlichen parallel zu der Längshohlraumachse verläuft und eine vordere und eine hintere Kante im Wesentlichen senkrecht zu der Längshohlraumachse verlaufen,
a4) wobei die zwei oder mehr Trägerplatten entlang einer oder mehrerer Linien parallel zu der Längshohlraumachse zusammengefügt sind oder sich schneiden und dabei den Hohlraum in mindestens drei Unterabschnitte teilen, welche zu der Längshohlraumachse parallel sind, wobei die Längskanten der Trägerplatten länger sind als die längste Diagonale der Unterabschnitte senkrecht zu der Längshohlraumachse,
a4) in dem Längshohlraum derart befestigt sind, dass die Längskanten der zwei oder mehr Trägerplatten parallel zu der Längshohlraumachse sind,
a5) wobei die Fläche der kombinierten Querschnitte der Trägerplatten und
des dehnbaren Materials senkrecht zu der Längsachse höchstens 20 % der Fläche des entsprechenden Querschnitts des Hohlraums beträgt,
b) wobei das unter Wärme dehnbare Material derart ausgewählt ist, dass es sich um mindestens 1000 % ausdehnt, wenn es auf eine Temperatur im Bereich von 130 bis 220 °C erwärmt wird,
**dadurch gekennzeichnet, dass**
a6) innerhalb jedes Unterabschnitts mindestens eine der Trägerplattenoberflächen, die den Unterabschnitt begrenzen, mit einer Schicht aus einem unter Wärme dehnbaren Material bedeckt ist,
c) und wobei die Dicke des unter Wärme dehnbaren Materials auf den Trägerplatten und die Fläche, die es auf jeder Trägerplatte bedeckt, so gewählt sind, dass nach der Ausdehnung der Querschnitt des Längshohlraums entlang einer Länge parallel zu der Längshohlraumachse vollständig mit den Trägerplatten und dem ausgedehnten Material gefüllt ist, welche Länge mindestens so lang ist wie die längste Diagonale der Unterabschnitte senkrecht zu der Längshohlraumachse.

2. Element nach Anspruch 1, wobei die Längskanten der Trägerplatten des Einsatzes eine Länge im Bereich von 20 bis 200 mm haben.

3. Element mindestens nach einem der Ansprüche 1 und 2, wobei die Größe der zwei oder mehr Trägerplatten des Einsatzes derart gewählt ist, dass die Längskanten der zwei oder mehr Trägerplatten einen Abstand von der nächsten Hohlraumwand von nicht mehr als 10 mm haben.

4. Element mindestens nach einem der Ansprüche 1 bis 3, wobei die Dicke der Trägerplatten und die Dicke des unter Wärme dehnbaren Materials des Einsatzes derart gewählt sind, dass nach der Ausdehnung des unter Wärme dehnbaren Materials die kombinierte Fläche des ausgedehnten Materials und die Fläche der kombinierten Querschnitte der Trägerplatten senkrecht zu der Längsachse ein Verhältnis von mindestens 10 : 1, vorzugsweise mindestens 50 : 1 hat.

5. Element nach mindestens einem der Ansprüche 1 bis 4, wobei die Schicht aus dem ausdehnbaren Material, die eine Plattenoberfläche des Einsatzes bedeckt, in einem Abstand von nicht mehr als 5 mm von der vorderen Kante beginnt und in einem Abstand von nicht mehr als 5 mm von der hinteren Kante der Trägerplatte endet.

6. Element mindestens nach einem der Ansprüche 1 bis 5, wobei sich das unter Wärme dehnbare Material des Einsatzes um mindestens 1500 % ausdehnt, wenn es auf eine Temperatur im Bereich von 130 bis 220 °C erwärmt wird.

7. Einsatz zur akustischen Dämpfung mit einer solchen Struktur und Form, dass dieser als Einsatz des Elements nach mindestens einem der Ansprüche 1 bis 6 verwendet werden kann.

8. Element, aufweisend einen Längshohlraum, der durch miteinander verbundene Hohlraumwände gebildet ist und eine Längshohlraumachse hat, wobei das Element enthält:
einen Einsatz zur akustischen Dämpfung, der durch Erwärmen des Elements nach mindestens einem der Ansprüche 1 bis 6 auf eine Temperatur im Bereich von 130 bis 220 °C erhalten wird, so dass das unter Wärme dehnbare Material des Einsatzes in den ausgedehnten Zustand gebracht wurde.

9. Fahrzeug, aufweisend ein Element nach Anspruch 8.

10. Verfahren zur Herstellung eines Einsatzes nach Anspruch 7, aufweisend die folgenden Schritte:
- Extrudieren eines Strangs der zwei oder mehr sich schneidenden Trägerplatten in eine Richtung parallel zu ihren Längskanten,
- Schneiden des extrudierten Strangs auf die gewünschte Länge der Längskanten der Trägerplatte(n),
- Extrudieren eines flachen Strangs des unter Wärme dehnbaren Materials in eine Richtung parallel zu der Längskante einer Trägerplatte mit einer Breite entsprechend der Abmessung einer ausgewählten Trägerplattenoberfläche, die mit dem unter Wärme dehnbaren Material bedeckt werden soll,
- Schneiden des Strangs des unter Wärme dehnbaren Materials auf die gewünschte Länge, um die ausgewählte Trägerplattenoberfläche zu bedecken, und
- Befestigen des geschnittenen Strangs (der geschnittenen Stränge) des unter Wärme dehnbaren Materials auf der ausgewählten Trägerplattenoberfläche(n).

11. Verfahren zur Herstellung eines Einsatzes nach Anspruch 7, aufweisend die folgenden Schritte:
- Coextrudieren eines Strangs der zwei oder mehr sich schneidenden Trägerplatten in eine Richtung parallel zu ihren Längskanten in einem oder in zwei Schritten, und der geeigneten Anzahl an flachen Strängen des unter Wärme dehnbaren Materials in eine Richtung parallel zu der Längskante einer Trägerplatte auf eine solche Weise, dass die Stränge des unter Wärme dehnbaren Materials mit der entsprechenden Oberfläche der Trägerplatte verbunden werden, und
- Schneiden des coextrudierten Strangs auf die gewünschte Länge der Längskanten der Trägerplatte(n).

12. Verfahren zur Dämpfung einer durch Luft und die Struktur übertragenen Vibration in einem Element, aufweisend einen Längshohlraum, der durch Verbinden von Hohlraumwänden gebildet wird, wobei das Verfahren aufweist:
a) Platzieren eines Einsatzes nach Anspruch 7 an einer vorbestimmten Position innerhalb des Längshohlraums, so dass ein Element nach mindestens einem der Ansprüche 1 bis 6 erhalten wird, und
b) Erwärmen des unter Wärme dehnbaren Materials auf eine Temperatur, die wirksam ist, um zu bewirken, dass sich das unter Wärme dehnbare Material ausdehnt und mit den Innenflächen des Hohlraums in Berührung kommt, wodurch der Hohlraum abgedichtet wird.

## Revendications

1. Elément comprenant une cavité longitudinale formée par des parois de cavité interconnectées et ayant un axe de cavité longitudinale, ledit élément contenant :
un insert destiné à l'amortissement acoustique comprenant :
a) deux plaques porteuses ou plus qui
a1) n'ont pas de canaux dans la direction de l'axe de cavité longitudinale et qui
a2) sont faites d'un matériau qui est inerte lorsqu'il est chauffé à une température qui ne dépasse pas 220°C,
a3) chaque plaque porteuse ayant deux surfaces de plaque, un bord longitudinal essentiellement parallèle à l'axe de cavité longitudinale, et un bord avant et arrière essentiellement perpendiculaires à l'axe de cavité longitudinale,
a4) les deux plaques porteuses ou plus étant jointe ou se croisant le long d'une ou plusieurs lignes parallèles à l'axe de cavité longitudinale, divisant la cavité en au moins trois sous-sections qui sont parallèles à l'axe de cavité longitudinale, les bords longitudinaux des plaques porteuses étant plus longs que la diagonale la plus longue des sous-sections perpendiculaires à l'axe de cavité longitudinale
a4) sont fixes dans la cavité longitudinale de manière à ce que les bords longitudinaux des deux plaques porteuses ou plus soient parallèles à l'axe de cavité longitudinale,
a5) la surface des sections transversales combinées des plaques porteuses et du matériau expansible perpendiculaires à l'axe longitudinal étant de 20 % au plus, de la surface de la section transversale correspondante de la cavité,
b) dans lequel le matériau thermiquement expansible est sélectionné de telle sorte qu'il se déploie d'au moins 1000 % lorsqu'il est chauffé à une température dans la plage d'environ 130 à 220°C, **caractérisé en ce que** a6) à l'intérieur de chaque sous-section, au moins une des surfaces de plaque porteuse limitant la sous-section est recouverte par une couche d'un matériau thermiquement expansible,
c) et dans lequel l'épaisseur du matériau thermiquement expansible sur les plaques porteuses et la surface qu'il recouvre sur chaque plaque porteuse sont choisies de manière à ce que, après l'expansion, la section transversale de la cavité longitudinale soit remplie en totalité avec les plaques porteuses et le matériau expansé sur une longueur parallèle à l'axe de cavité longitudinale qui est au moins aussi longue que la diagonale la plus longue des sous-sections perpendiculaires à l'axe de cavité longitudinale.

2. Elément selon la revendication 1, dans lequel les bords longitudinaux des plaques porteuses de l'insert ont une longueur dans la plage de 20 à 200 mm.

3. Elément selon au moins l'une des revendications 1 et 2, dans lequel la taille de deux plaques porteuses ou plus de l'insert est sélectionnée de telle sorte que les bords longitudinaux des deux plaques porteuses ou plus ont une distance par rapport à la paroi de cavité la plus proche qui n'est pas supérieure à 10 mm.

4. Elément selon au moins l'une des revendications 1 à 3, dans lequel l'épaisseur des plaques porteuses et l'épaisseur du matériau thermiquement expansible de l'insert sont sélectionnées de manière à ce que, après l'expansion du matériau thermiquement expansible, la surface combinée du matériau expansé et la surface des sections transversales combinées des plaques porteuses perpendiculaires à l'axe longitudinal aient un rapport d'au moins 10 : 1, de préférence d'au moins 50 : 1.

5. Elément selon au moins l'une des revendications 1 à 4, dans lequel la couche du matériau expansible recouvrant une surface de plaque de l'insert commence à une distance qui n'est pas supérieure à 5 mm par rapport au bord avant, et se termine à une distance qui n'est pas supérieure à 5 mm par rapport au bord arrière de la plaque porteuse.

6. Elément selon au moins l'une des revendications 1 à 5, dans lequel le matériau thermiquement expansible de l'insert s'expanse d'au moins 1500 % lorsqu'il est chauffé à une température dans la plage de 130 à 220°C.

7. Insert destiné à l'amortissement acoustique avec une structure et une forme de telle sorte qu'il peut être utilisé en tant qu'insert de l'élément d'au moins l'une des revendications 1 à 6.

8. Elément comprenant une cavité longitudinale formée par des parois de cavité interconnectées et ayant un axe de cavité longitudinale, ledit élément contenant :
un insert destiné à l'amortissement acoustique qui est obtenu en chauffant l'élément d'au moins l'une des revendications 1 à 6 à une température dans la plage de 130 à 220°C, de sorte que le matériau thermiquement expansible de l'insert a été transformé à l'état expansé.

9. Véhicule comprenant un élément selon la revendication 8.

10. Procédé de fabrication d'un insert selon la revendication 7, comprenant les étapes :
- d'extrusion d'un brin des deux plaques porteuses ou plus qui se croisent dans une direction parallèle à leurs bords longitudinaux,
- de découpe du brin extrudé aux longueurs souhaitées des bords longitudinaux de la ou des plaques porteuses,
- d'extrusion d'un brin plat du matériau thermiquement expansible dans une direction parallèle au bord longitudinal d'une plaque porteuse ayant une largeur correspondant à la dimension d'une plaque porteuse sélectionnée qui doit être recouverte par le matériau thermiquement expansible,
- de découpe du brin du matériau thermiquement expansible à la longueur souhaitée pour recouvrir la surface de plaque porteuse sélectionnée, et
- de fixation du ou des brins découpés du matériau thermiquement expansible sur la ou les surfaces de plaques porteuses.

11. Procédé de fabrication d'un insert selon la revendication 7, comprenant les étapes :
- de coextrusion en une ou deux étapes d'un brin des deux plaques porteuses ou plus qui se croisent dans une direction parallèle à leurs bords longitudinaux, et du nombre approprié de brins plats du matériau thermiquement expansible, dans une direction parallèle au bord longitudinal d'une plaque porteuse de manière à ce que les brins du matériau thermiquement expansible soient reliés à la surface correspondante de la plaque porteuse, et
- de découpe des brins coextrudés aux longueurs souhaitées des bords longitudinaux des plaques porteuses.

12. Procédé d'amortissement de vibrations transmises par l'air ou la structure dans un élément comprenant une cavité longitudinale formée par des parois de cavité interconnectées, ledit procédé comprenant :
a) le placement d'un insert selon la revendication 7 dans une position prédéterminée à l'intérieur de ladite cavité longitudinale de sorte qu'un élément selon au moins l'une des revendications 1 à 6 est obtenu, et
b) le chauffage dudit matériau thermiquement expansible à une température efficace pour entraîner l'expansion dudit matériau thermiquement expansible et le mettre en contact avec les surfaces intérieures de ladite cavité, isolant ainsi ladite cavité.
